# EUROPÄISCHE PATENTSCHRIFT

(11) **EP 3 761 068 B1**
(45) Veröffentlichungstag und Bekanntmachung des Hinweises auf die Patenterteilung: **13.04.2022**
(21) Anmeldenummer: 20175626.9
(22) Anmeldetag: 20.05.2020
(51) Int. Cl.: G01V 8/20

(54) **OPTOELEKTRONISCHE SENSORANORDNUNG**
OPTOELECTRONIC SENSOR ASSEMBLY
AGENCEMENT DE CAPTEUR OPTOÉLECTRONIQUE

(30) Priorität: 04.07.2019 DE 102019118104
(43) Veröffentlichungstag der Anmeldung: 06.01.2021
(73) Patentinhaber: SICK AG, 79183 Waldkirch (DE)
(72) Erfinder: Götz, Matthias, 79104 Freiburg (DE); Merettig, Gerhard, 79350 Sexau (DE); Hörsch, Ingolf, 79102 Freiburg (DE); Waslowski, Kai, 79312 Emmendingen (DE)

(56) Entgegenhaltungen:
- EP-A2- 1 801 618
- EP-A2- 2 487 512
- EP-A2- 2 881 762
- US-A1- 2014 361 149

## Beschreibung

Die vorliegende Erfindung betrifft eine optoelektronische Sensoranordnung gemäß dem Oberbegriff von Anspruch 1.

Bei der Detektion hochglänzender Objekte mit unebener Oberfläche mit Triangulationslichttastern kommt es häufig zu fehlerhaftem Ein- oder Ausschalten des Sensors. Ursache hierfür ist, dass sowohl Energie als auch der Median der Lichtverteilung des von der Objektoberfläche reflektierten oder gestreuten bzw. remittierten Lichts auf der Empfangsdiode aufgrund teilweiser oder vollständiger Wegspiegelung ganz erheblich von den lokalen optischen Eigenschaften des Objekts abhängt.

Die EP 2 487 512 A2 offenbart ein Lichtgitter mit einem Schutzfeld, das von einer ersten Sende-/Empfangsleiste und einer zweiten Sende-/Empfangsleiste begrenzt ist, wobei die erste Sende-/Empfangsleiste und die zweite Sende-/Empfangsleiste jeweils mindestens eine erste Gruppe mit mindestens einer Sendeeinheit und mindestens eine zweite Gruppe mit mindestens einer Empfangseinheit aufweisen, wobei die Gruppen benachbart zueinander und alternierend in einer Reihe angeordnet sind, und mit mindestens einer Steuer- und Auswerte-Elektronik, wobei ferner die erste Sende-/Empfangsleiste und die zweite Sende-/Empfangsleiste räumlich so angeordnet sind, dass einer Sendeeinheit der ersten Sende-/Empfangsleiste eine Empfangseinheit der zweiten Sende-/Empfangsleiste gegenüberliegt, die mit dieser ein Paar bildet.

Die EP 2 881 762 A2 offenbart einen optoelektronischer Sensor zur Erfassung glänzender Objekte, der einen Lichtsender mit mindestens einer Lichtquelle zum Erzeugen eines Sendelichtstrahls, einen Lichtempfänger mit einer Empfängerzeilenanordnung von Lichtempfangselementen sowie einer Auswertungseinheit aufweist, um glänzende Objekte anhand eines Empfangssignals des Lichtempfängers zu erkennen. Dabei weist der Lichtsender mehrere zu mindestens einer Senderzeile angeordnete Lichtquellen auf, und die Auswertungseinheit ist dafür ausgebildet, in den Empfangssignalen der Lichtempfangselemente ein Intensitätsprofil über die Zeilenanordnung zu erkennen und auszuwerten.

Die EP 1 801 618 A2 betrifft eine optoelektronische Vorrichtung. Diese umfasst einen Sendelichtstrahlen emittierenden Sender und einen Empfangslichtstrahlen empfangenden, aus einer Anordnung von Empfangselementen bestehenden Empfänger. Der Auftreffpunkt der von einem Objekt als Empfangslichtstrahlen rückreflektierten Sendelichtstrahlen stellt auf den Empfangselementen des Empfängers ein Maß für die Objektdistanz dar. Die Ausgangssignale der Empfangselemente werden mit einer Gewichtungsfunktion gewichtet und die Summe der gewichteten Ausgangssignale zur Generierung eines binären Schaltsignals mit einem Schwellwert bewertet.

Eine Aufgabe der Erfindung besteht darin, einen verbesserten Triangulationslichttaster bereitzustellen. Eine weitere Aufgabe der Erfindung besteht darin, den Schaltungsaufwand für eine optoelektronische Sensoranordnung bzw. einen Triangulationslichttaster zu vereinfachen. Beispielsweise soll eine Anzahl von Verbindungsleitungen zwischen Auswerteeinheiten möglichst gering sein.

Die Aufgabe wird gemäß Anspruch 1 gelöst durch eine optoelektronische Sensoranordnung mit mindestens einem Lichtsender, zum Aussenden von Lichtsignalen in einen Überwachungsbereich, einer Ansteuereinheit zur Ansteuerung des Lichtsenders, mit einem ersten Lichtempfänger zum Empfang der von dem Lichtsender ausgesendeten Lichtsignalen, wobei der Lichtempfänger als Empfängerzeile ausgebildet ist, mit einer ersten Hauptauswerteeinheit zur Auswertung der Empfangssignale des ersten Lichtempfängers, mit einem zweiten Lichtempfänger zum Empfang der von dem Lichtsender ausgesendeten Lichtsignalen, wobei der Lichtempfänger als Empfängerzeile ausgebildet ist, mit einer zweiten Nebenauswerteeinheit zur Auswertung der Empfangssignale des zweiten Lichtempfängers, wobei wenigstens ein erster ASIC-Baustein vorgesehen ist, wobei der erste ASIC-Baustein mindestens die Ansteuereinheit aufweist und der erste Lichtempfänger und die erste Hauptauswerteeinheit in dem ersten ASIC-Bausteins angeordnet ist und der zweite Lichtempfänger und die zweite Nebenauswerteeinheit in einem zweiten ASIC-Bausteins angeordnet ist.

Ein ASIC, bzw. ein ASIC-Baustein ist eine applikationsspezifische integrierte Schaltung. Der erste ASIC-Baustein und der zweite ASIC-Baustein sind optional identisch ausgebildet.

Diese integrierte Sende-/Empfangs-/Auswerteeinheit bzw. der erste bzw. zweite ASIC-Baustein kann sowohl in einem Sensor mit einem einzigen ersten Lichtempfänger als auch in einem Sensor mit einem ersten und zweiten Lichtempfänger eingesetzt werden. Dadurch ist der ASIC-Baustein vielseitig einsetzbar und die Herstellstückzahl kann erhöht werden, wodurch Produktionskosten pro Stück reduziert werden können.

Der erste ASIC-Baustein und der zweite ASIC-Baustein können unabhängig voneinander positioniert werden, wodurch ein Abstand zwischen dem ersten Lichtempfänger und dem zweiten Lichtempfänger bzw. der Abstand der Lichtempfänger zu dem Lichtsender frei definierbar ist und die ASIC-Bausteine unterschiedlich, beispielsweise auf einer Leiterplatte angeordnet werden können.

Eine deutliche Erhöhung der Robustheit bei der Detektion hochglänzender Objekte mit unebener Oberfläche wird dadurch erzielt, dass die optoelektronische Sensoranordnung als Doppelempfänger ausgeführt wird, so dass das vom Objekt remittierte Licht unter unterschiedlichen Winkeln empfangen wird. Eine Änderung des Objektfeststellungssignals findet beispielsweise nur statt, wenn beide Empfänger denselben Zustand liefern.

Vorzugsweise ist die zweite Nebenauswerteeinheit bzgl. Ihrer Empfangsoptik gerade achsensymmetrisch um die Sendeachse gespiegelt zu der ersten Hauptauswerteeinheit angeordnet, so dass Fehler aufgrund der glänzenden Objektoberfläche gerade umgekehrt abgebildet werden und damit kompensiert werden können.

Gemäß der Erfindung enthält der erste ASIC-Baustein alle für den parallelen Betrieb mindestens zweier Lichtempfänger notwendigen Schaltungen, insbesondere Synchronisierungs- und Auswerteschaltungen, die mit geringem zusätzlichen Aufwand kostengünstig in der integrierten Schaltung bzw. dem ersten ASIC-Baustein realisiert bzw. integriert werden können.

Die Erfindung erlaubt einen synchronen parallelen Betrieb des ersten ASIC-Bausteins und des zweiten ASIC-Bausteins.

In Weiterbildung der Erfindung weist die Hauptauswerteeinheit einen Ausgang für ein erstes Objektfeststellungssignal auf und die Nebenauswerteeinheit einen Ausgang für ein zweites Objektfeststellungssignal auf, wobei eine Doppelempfängerauswerteeinheit jeweils einen Eingang für das erste Objektfeststellungssignal und das zweite Objektfeststellungssignal aufweist, wobei die Doppelempfängerauswerteeinheit mindestens einen Ausgang für ein Ergebnisobjektfeststellungssignal aufweist.

Die Doppelempfängerauswerteeinheit ist ebenfalls im ersten und/oder im zweiten ASIC-Baustein integriert. Damit generiert mindestens einer der ASIC-Bausteine aus den Objektfeststellungssignalen beider Einheiten ein resultierendes Objektfeststellungssignal. Eine externe Auswerteeinheit ist gemäß dieser Ausführungsform nicht erforderlich.

Der erste ASIC-Baustein und der zweite ASIC-Baustein generieren jeweils ein unabhängiges Objektfeststellungssignal, nämlich das erste Objektfeststellungssignal und das zweite Objektfeststellungssignal. Die Doppelempfängerauswerteeinheit generiert aus den beiden Objektfeststellungssignalen ein resultierendes Ergebnisobjektfeststellungssignal. Dieses ändert sich nur dann, wenn die Objektfeststellungssignale des ersten ASIC-Bausteins und des zweiten ASIC-Bausteins identisch sind. Sind diese unterschiedlich, wird der bisherige Zustand des resultierenden Ergebnisobjektfeststellungssignals beibehalten.

Zur Generierung der Objektfeststellungssignale kann der erste ASIC-Baustein bzw. der zweite ASIC-Baustein weitere Informationen hinzuziehen, beispielsweise darüber, ob die Energie des Empfangssignals eine Mindestschwelle oder eine Höchstschwelle überschreitet. Dies bietet die Möglichkeit das Objektfeststellungssignal eines ASIC-Bausteins mit zu niedrigem oder zu hohem Signalpegel bei der Bildung des resultierenden Ergebnisobjektfeststellungssignals zu ignorieren. Diese Information kann über eine bzw. zwei zusätzliche Leitungen von dem zweiten ASIC-Baustein an den ersten ASIC-Baustein übertragen werden.

Bei dem optoelektronischen Sensor handelt es sich um einen Triangulationssensor bzw. Triangulationslichttaster. Ein derartiger Triangulationslichttaster umfasst den Lichtsender, beispielsweise eine Leuchtdiode oder einen Laser, und gegebenenfalls eine Sendeoptik, um einen Sendelichtstrahl in eine Detektionszone zu einem dort ggf. befindlichen, zu detektierenden Objekt auszusenden. Das Sendelicht kann von einem solchen Objekt remittiert, d.h. diffus oder spiegelnd reflektiert und von einem Lichtempfänger detektiert werden, der zusammen mit einer Empfangsoptik eine Empfangseinheit bildet. Der Lichtempfänger besteht aus der Empfängerzeile, also aus wenigstens einer Zeile von fotosensitiven Empfangselementen.

In Abhängigkeit von der Entfernung zwischen dem Triangulationslichttaster und dem remittierten Objekt ändert sich die Position eines durch das remittierte Licht erzeugten Lichtflecks auf dem Lichtempfänger in der sogenannten Triangulationsrichtung. Zwischen dem Auftreffpunkt auf dem Lichtempfänger und der Entfernung des erfassten Objekts besteht ein eindeutiger geometrischer Zusammenhang. Durch eine Auswertung einer Lichtverteilung auf dem Lichtempfänger kann damit die Entfernung zwischen Objekt und Lichttaster bestimmt werden. Weiterhin kann bei entsprechender Auswertung der Lichtverteilung auf dem Lichtempfänger bestimmt werden, ob sich ein Objekt innerhalb oder außerhalb einer vorbestimmten, auch als Tastweite bezeichnete Grenze liegt.

Um insbesondere eine hohe Genauigkeit bei der Entfernungsbestimmung zu erreichen, muss ein solcher Lichtempfänger eine Vielzahl fotosensitiver Empfangselemente aufweisen, die in der Triangulationsrichtung nebeneinander angeordnet sind.

In Weiterbildung der Erfindung weist die Hauptauswerteeinheit einen Ausgang für ein erstes Objektabstandssignal auf und die Nebenauswerteeinheit einen Ausgang für ein zweites Objektabstandssignal auf, wobei die Doppelempfängerauswerteeinheit jeweils einen Eingang für das erste Objektabstandssignal und das zweite Objektabstandssignal aufweist, wobei die Doppelempfängerauswerteeinheit mindestens einen Ausgang für ein Ergebnisobjektabstandssignal aufweist.

Das Ergebnisobjektabstandssignal bildet damit das Ergebnissignal basierend auf dem ersten Objektabstandssignal und dem zweiten Objektabstandssignal.

Eine externe Bereitstellung und Übermittlung des ersten Objektabstandssignals und des zweiten Objektabstandssignals erfolgt beispielsweise über einen in dem ersten ASIC-Baustein und/oder in dem zweiten ASIC-Baustein integrierten Datenbus.

In Weiterbildung der Erfindung sind in der Doppelempfängerauswerteeinheit zur Generierung des Ergebnisobjektfeststellungssignals der Ausgang der Hauptauswerteeinheit mit dem Ausgang der Nebenauswerteeinheit logisch und/oder numerisch miteinander verknüpft.

Damit kann neben der logischen Auswertung beispielsweise eine Gewichtung der Einzelergebnisse der Objektfeststellungssignale vorgenommen werden.

In Weiterbildung der Erfindung ist in der Doppelempfängerauswerteeinheit zur Generierung des Ergebnisobjektabstandssignals ein Ausgang der Hauptauswerteeinheit mit einem Ausgang der Nebenauswerteeinheit logisch bewertet und/oder numerisch gewichtet.

Damit kann neben der logischen Auswertung beispielsweise eine Gewichtung der Einzelergebnisse der Objektabstandssignale vorgenommen werden.

In Weiterbildung der Erfindung weist der erste ASIC-Baustein die Doppelempfängerauswerteeinheit auf, welche mit der Hauptauswerteeinheit und der Nebenauswerteeinheit verbunden ist.

Alternativ kann die Doppelempfängerauswerteeinheit auch in dem zweiten ASIC-Baustein angeordnet sein.

Damit generiert der erste ASIC-Baustein oder der zweite ASIC-Baustein aus den Objektfeststellungssignalen ein resultierendes Objektfeststellungssignal. Eine externe Auswerteeinheit ist gemäß dieser Ausführungsform nicht erforderlich.

In Weiterbildung der Erfindung ist eine außerhalb des ASIC-Bausteins angeordnete externe Auswerteeinheit angeordnet, welche mit der Hauptauswerteeinheit und der Nebenauswerteeinheit verbunden ist, wobei die externe Auswerteeinheit mindestens einen Ausgang für ein Ergebnisobjektfeststellungssignal aufweist

Die Generierung des Ergebnisobjektfeststellungssignals kann durch eine externe Auswerteeinheit, beispielsweise einen Mikrocontroller erfolgen. Hierbei kann eine differenziertere Auswertung erfolgen als bei einer Generierung des Ergebnisobjektfeststellungssignals in der Doppelempfängerauswerteeinheit im ASIC-Baustein. Insbesondere kann eine Energie der Empfangssignale von dem ersten ASIC-Baustein und/oder dem zweiten ASIC-Baustein ausgewertet werden. Damit kann nicht nur derjenige ASIC-Baustein mit einem Empfangssignal unterhalb einer Mindestschwelle oder oberhalb einer Höchstschwelle ignoriert werden, sondern außerdem im dazwischenliegenden Bereich eine empfangssignalabhängige Gewichtung durchgeführt werden. Eine Übermittlung der zusätzlichen Informationen an die externe Auswerteeinheit erfolgt beispielsweise über einen in dem ersten ASIC-Baustein und/oder in dem zweiten ASIC-Baustein integrierten Datenbus.

Als alternative Ausführung ist es denkbar, dass die interne Ansteuereinheit nicht verwendet wird und stattdessen die Ansteuereinheit in einer externen Einheit z. B. in einem FPGA angeordnet ist. In diesem Fall werden die Ausgänge der Sendegeneratoren des ersten ASIC-Bausteins und/oder des zweiten ASIC-Bausteins an die externe Ansteuereinheit geführt, ebenso der Datenbus des ersten ASIC-Bausteins und/oder des zweiten ASIC-Bausteins mit weiteren Informationen, beispielsweise eine Signalenergie an die externe Ansteuereinheit übertragen. Aus Signalenergie und Sendepulslänge des ersten ASIC-Bausteins und/oder des zweiten ASIC-Bausteins kann die optimale Länge des Sendepulses präziser bestimmt werden. Beispielsweise in den Fällen, in denen ein Empfänger übersteuert ist (Blendung) oder aber zu wenig Energie erhält (Wegspiegeln). Die Ansteuereinheit kann damit besser an die tatsächlichen Objekteigenschaften angepasst werden, als dies mit der einfachen logischen Verknüpfung in der ASICinternen Ansteuereinheit möglich wäre.

Nach der Erfindung weisen der erste ASIC-Baustein und der zweite ASIC-Baustein jeweils eine Doppelempfängersynchronisationseinheit auf, die jeweils miteinander verbunden sind.

Im Doppelempfängerbetrieb werden Schaltungstakt, Sendepulsraster und Sendepulsrahmen sowie die Empfangssignalverarbeitung zwischen dem ersten ASIC-Baustein und dem zweiten ASIC-Baustein synchronisiert.

Der erste ASIC-Baustein generiert beispielsweise ein Rahmensynchronisationssignal, das dafür sorgt, dass Sende- und Empfangsrahmen in beiden Einheiten synchron sind. Da in dem zweiten ASIC-Baustein zwangsläufig eine Verzögerung des übertragenen Synchronisationssignals erfolgt, ist auch in dem ersten ASIC-Baustein eine entsprechende Verzögerung vorzunehmen, um einen synchronen Betrieb von erstem ASIC-Baustein und zweitem ASIC-Baustein zu gewährleisten.

In Weiterbildung der Erfindung sind die Doppelempfängersynchronisationseinheiten jeweils an einen gemeinsamen Oszillator angeschlossen und weisen jeweils einen Taktgeber auf.

Der erste ASIC-Baustein und der zweite ASIC-Baustein werden von einem externen Oszillator versorgt, der ein im Vergleich zum Schaltungstakt des ASIC-Bausteins einen niedrigeren Takt für ein Senderaster vorgibt. Hieraus generiert eine Taktsynchronisation in dem ersten ASIC-Baustein und dem zweiten ASIC-Baustein sowohl den internen Schaltungstakt, als auch das interne Senderaster. Damit ist sichergestellt, dass der erste ASIC-Baustein und der zweite ASIC-Baustein mit synchronem Takt und synchronem Senderaster arbeiten.

In Weiterbildung der Erfindung ist die Ansteuereinheit in dem ersten ASIC-Baustein angeordnet.

Alternativ kann die Ansteuereinheit auch in dem zweiten ASIC-Baustein angeordnet sein. Dadurch ist der erste ASIC-Baustein ein Master der ASIC-Bausteine, welcher die wesentlichen Funktionen des ASIC-Bausteine steuert und auswertet.

In Weiterbildung der Erfindung weist der erste ASIC-Baustein und der zweite ASIC-Baustein jeweils einen Sendegenerator auf, welche jeweils mit dem Taktgeber verbunden sind und wobei die Sendegeneratoren mit der Ansteuereinheit verbunden sind.

Der erste ASIC-Baustein und der zweite ASIC-Baustein generieren somit jeweils unabhängig voneinander ein synchrones Sendesignal. Aufgrund der Glanzeigenschaften des Objektes kann zur Vermeidung von Übersteuerungen eine Verkürzung des Sendepulses erforderlich sein, die in dem ersten ASIC-Baustein und dem zweiten ASIC-Baustein unterschiedlich ausfallen kann. Der erste ASIC-Baustein generiert daher aus beiden internen Sendesignalen ein resultierendes Sendesignal für die Ansteuerung des Lichtsenders. Die Sendelogik in der Ansteuereinheit wird bevorzugt als UND-Verknüpfung ausgeführt. Dies entspricht einer Entscheidung für den kürzeren der beiden Sendepulse aus dem ersten ASIC-Baustein und dem zweiten ASIC-Baustein. Dies ist sinnvoll, falls eine Signalübersteuerung der dominierende Fehlermechanismus ist. Alternativ kann die Sendelogik als ODER-Verknüpfung betrieben werden. Dies entspricht einer Entscheidung für den längeren der beiden Sendepulse aus dem ersten ASIC-Baustein und dem zweiten ASIC-Baustein. Dies kann sinnvoll sein, falls ein Fehlschalten aufgrund zu niedriger Empfangsenergie der dominierende Fehlermechanismus ist.

In Weiterbildung der Erfindung ist ein erster Lichtsender und ein zweiter Lichtsender angeordnet, wobei diese an dem ersten ASIC-Baustein und/oder an dem zweiten ASIC-Baustein angeschlossen sind.

Das Doppelempfängerprinzip kann mit einem Doppelsenderprinzip kombiniert werden. Die beiden Sendelichtstrahlen des ersten Lichtsenders und des zweiten Lichtsenders treffen meist an unterschiedlichen Stellen des Objekts unter verschiedenen Winkeln auf, was zu einer weiteren Erhöhung der Detektionsrobustheit führt. Da die Lichtfleckschwerpunkte, und/oder insbesondere die Lichtfleckmediane der beiden Empfangsstrahlen nicht notwendigerweise identisch sind, muss ein virtueller Trennsteg zwischen Nah- und Fernbereich auf dem Lichtempfänger abhängig vom gerade verwendeten Lichtsender umgeschaltet werden. Hierzu generiert der erste ASIC-Baustein ein zusätzliches Senderauswahlsignal, das mit einem Sendemultiplexer des zweiten ASIC-Bausteins verbunden ist und von diesem ausgewertet wird. Dadurch wird sichergestellt, dass der erste ASIC-Baustein und der zweite ASIC-Baustein hinsichtlich der Senderauswahl synchron arbeiten.

Die Kombination des Doppelempfängers mit dem Doppelsender führt zu einer Erhöhung der Detektionsrobustheit.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein erfindungsgemäße optoelektronische Sensoranordnung;
- Figur 2: eine Verwendung des ASIC-Bausteins;
- Figur 3: ein erster ASIC-Baustein und ein zweiter ASIC-Baustein gemäß vorliegender Erfindung;
- Figur 4: eine Synchronisierung von Taktsignalen;
- Figur 5: eine Verzögerung eines Synchronisationssignals;
- Figur 6: ein erster ASIC-Baustein und ein zweiter ASIC-Baustein gemäß vorliegender Erfindung;
- Figur 7: ein erster ASIC-Bausteins und ein zweiter ASIC-Baustein gemäß vorliegender Erfindung.

In den nachfolgenden Figuren sind identische Teile mit identischen Bezugszeichen versehen.

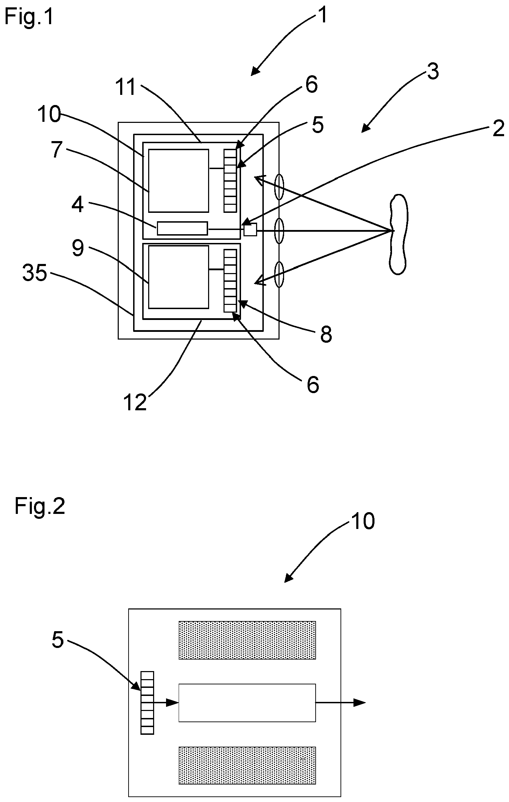

Figur 1 zeigt schematisch eine optoelektronische Sensoranordnung 1 mit mindestens einem Lichtsender 2, zum Aussenden von Lichtsignalen in einen Überwachungsbereich 3, einer Ansteuereinheit 4 zur Ansteuerung des Lichtsenders 2, mit einem ersten Lichtempfänger 5 zum Empfang der von dem Lichtsender 2 ausgesendeten Lichtsignalen, wobei der erste Lichtempfänger 5 als Empfängerzeile 6 ausgebildet ist, mit einer ersten Hauptauswerteeinheit 7 zur Auswertung der Empfangssignale des ersten Lichtempfängers 5, mit einem zweiten Lichtempfänger 8 zum Empfang der von dem Lichtsender 2 ausgesendeten Lichtsignalen, wobei der zweite Lichtempfänger 8 als Empfängerzeile 6 ausgebildet ist, mit einer zweiten Nebenauswerteeinheit 9 zur Auswertung der Empfangssignale des zweiten Lichtempfängers 8, wobei wenigstens ein ASIC-Baustein 10 vorgesehen ist, wobei der ASIC-Baustein 10 mindestens die Ansteuereinheit 4 aufweist, der erste Lichtempfänger 5 und die erste Hauptauswerteeinheit 7 in dem ersten ASIC-Baustein 10 angeordnet ist. Der erste ASIC-Baustein 10 und der zweite ASIC-Baustein sind beispielsweise auf einer gemeinsamen Leiterplatte 35 angeordnet.

Optional ist weiter der zweite Lichtempfänger 8 und die zweite Nebenauswerteeinheit 9 in einem zweiten ASIC-Baustein 12 angeordnet.

Diese integrierte Sende-/Empfangs-/Auswerteeinheit bzw. der ASIC-Baustein 10 kann gemäß Figur 2 sowohl in einem Sensor 1 mit einem einzigen ersten Lichtempfänger 5 als auch gemäß Figur 1 in einem Sensor 1 mit einem ersten Lichtempfänger 5 und einem zweiten Lichtempfänger 8 eingesetzt werden, wobei der zweite ASIC-Baustein mit gemäß Figur 1 mit dem Bezugszeichen 12 bezeichnet ist.

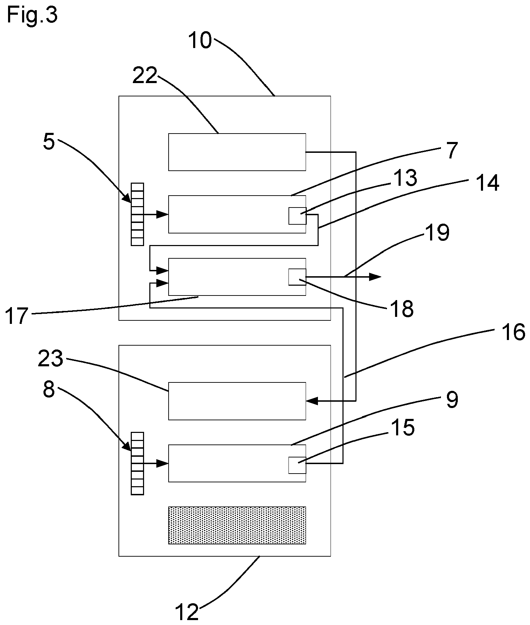

Gemäß Figur 3 weist die Hauptauswerteeinheit 7 ein Ausgang 13 für ein erstes Objektfeststellungssignal 14 auf und die Nebenauswerteeinheit 9 ein Ausgang 15 für ein zweites Objektfeststellungssignal 16 auf, wobei eine Doppelempfängerauswerteeinheit 17 jeweils einen Eingang für das erste Objektfeststellungssignal 14 und das zweite Objektfeststellungssignal 16 aufweist, wobei die Doppelempfängerauswerteeinheit 17 mindestens einen Ausgang 18 für ein Ergebnisobjektfeststellungssignal 19 aufweist.

Der erste ASIC-Baustein 10 und der zweite ASIC-Baustein 12 gemäß Figur 3 generieren jeweils ein unabhängiges Objektfeststellungssignal, nämlich das erste Objektfeststellungssignal 14 und das zweite Objektfeststellungssignal 16. Die Doppelempfängerauswerteeinheit 17 generiert aus den beiden Objektfeststellungssignalen ein resultierendes Ergebnisobjektfeststellungssignal 19. Dieses ändert sich nur dann, wenn die Objektfeststellungssignale des ersten ASIC-Bausteins 10 und des zweiten ASIC-Bausteins 12 identisch sind. Sind diese unterschiedlich, wird der bisherige Zustand des resultierenden Ergebnisobjektfeststellungssignals 19 beibehalten. Gemäß Figur 3 sind die Doppelempfängersynchronisationseinheiten 22 und 23 vorgesehen.

Zur Generierung der Objektfeststellungssignale kann der erste ASIC-Baustein 10 und/oder der zweite ASIC-Baustein 12 weitere Informationen hinzuziehen, beispielsweise darüber, ob die Energie des Empfangssignals eine Mindestschwelle oder eine Höchstschwelle überschreitet. Dies bietet die Möglichkeit das Objektfeststellungssignal einer Einheit mit zu niedrigem oder zu hohem Signalpegel bei der Bildung des resultierenden Ergebnisobjektfeststellungssignals 19 zu ignorieren. Diese Information kann über eine bzw. zwei zusätzliche Leitungen von dem zweiten ASIC-Baustein 12 an den ersten ASIC-Baustein 10 übertragen werden.

Nicht dargestellt ist, dass die Hauptauswerteeinheit 7 einen Ausgang für ein erstes Objektabstandssignal aufweisen kann und die Nebenauswerteeinheit 9 einen Ausgang für ein zweites Objektabstandssignal aufweisen kann, wobei die Doppelempfängerauswerteeinheit 17 jeweils einen Eingang für das erste Objektabstandssignal und das zweite Objektabstandssignal aufweisen kann, wobei die Doppelempfängerauswerteeinheit 17 mindestens einen Ausgang für ein Ergebnisobjektabstandssignal aufweisen kann.

Gemäß Figur 3 weist der erste ASIC-Baustein 10 die Doppelempfängerauswerteeinheit 17 auf, welche mit der Hauptauswerteeinheit 7 und der Nebenauswerteeinheit 9 verbunden ist.

Alternativ kann die Doppelempfängerauswerteeinheit 17 auch in dem zweiten ASIC-Baustein 12 angeordnet sein.

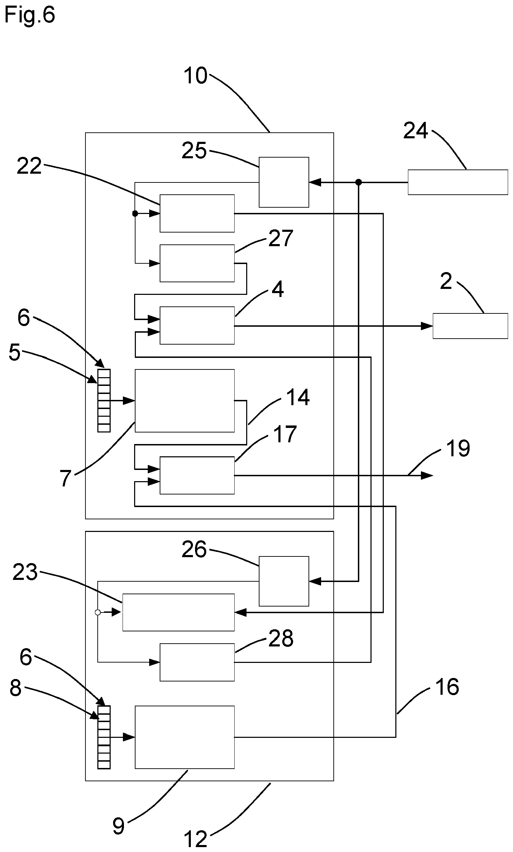

Gemäß Figur 6 sind die Doppelempfängersynchronisationseinheiten 22 und 23 jeweils an einen gemeinsamen Oszillator 24 angeschlossen und weisen jeweils einen Taktgeber 25 oder Taktgeber 26 auf.

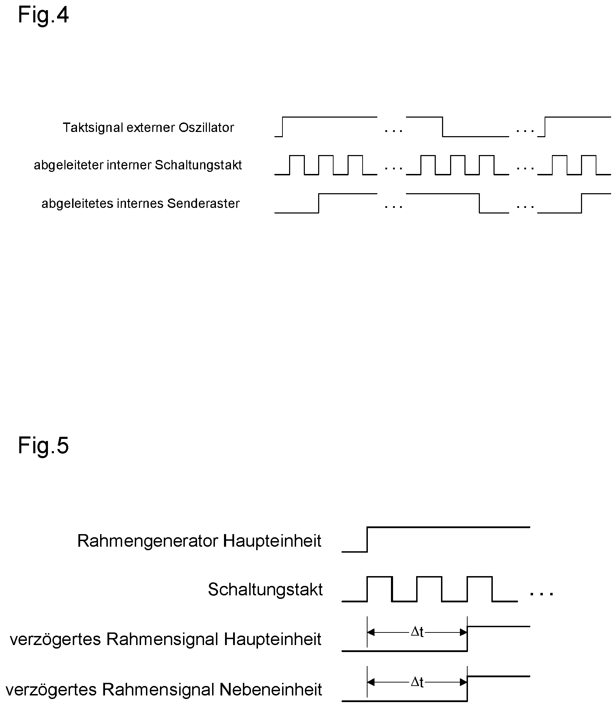

Gemäß Figur 4 werden der erste ASIC-Baustein und der zweite ASIC-Baustein von einem externen Oszillator 24 gemäß Figur 6 versorgt, der ein im Vergleich zum Schaltungstakt niedrigen Takt für ein Senderaster vorgibt. Hieraus generiert eine Taktsynchronisation in dem ersten ASIC-Baustein und dem zweiten ASIC-Baustein sowohl den internen Schaltungstakt, als auch das interne Senderaster. Damit ist sichergestellt, dass der erste ASIC-Baustein und der zweite ASIC-Baustein mit synchronem Takt und synchronem Senderaster arbeiten.

Gemäß Figur 6 weisen der erste ASIC-Baustein 10 und der zweite ASIC-Baustein 12 jeweils eine Doppelempfängersynchronisationseinheit 22 bzw. 23 auf, die jeweils miteinander verbunden sind.

Im Doppelempfängerbetrieb werden Schaltungstakt, Sendepulsraster und Sendepulsrahmen sowie die Empfangssignalverarbeitung zwischen dem ersten ASIC-Baustein 10 und dem zweiten ASIC-Baustein 12 synchronisiert.

Gemäß Figur 5 generiert der erste ASIC-Baustein ein Rahmensynchronisationssignal, das dafür sorgt, dass Sende- und Empfangsrahmen in beiden Einheiten synchron sind.

Da in dem zweiten ASIC-Baustein zwangsläufig eine Verzögerung des übertragenen Synchronisationssignals erfolgt, ist auch in dem ersten ASIC-Baustein eine entsprechende Verzögerung vorzunehmen., um einen synchronen Betrieb von ersten ASIC-Baustein und zweitem ASIC-Baustein zu gewährleisten.

Gemäß Figur 6 ist die Ansteuereinheit 4 in dem ersten ASIC-Baustein 10 angeordnet. Gemäß Figur 6 weist der erste ASIC-Baustein 10 und der zweite ASIC-Baustein 12 jeweils einen Sendegenerator 27 bzw. 28 auf, welche jeweils mit dem Taktgeber 25 bzw. 26 verbunden sind und wobei die Sendegeneratoren 27 bzw. 28 mit der Ansteuereinheit 4 verbunden sind.

Der erste ASIC-Baustein 11 und der zweite ASIC-Baustein 12 generiert jeweils unabhängig voneinander ein synchrones Sendesignal. Aufgrund der Glanzeigenschaften des Objektes kann zur Vermeidung von Übersteuerungen eine Verkürzung des Sendepulses erforderlich sein, die in dem ersten ASIC-Baustein 10 und dem zweiten ASIC-Baustein 12 unterschiedlich ausfallen kann. Der erste ASIC-Baustein 10 generiert daher aus beiden internen Sendesignalen ein resultierendes Sendesignal für die Ansteuerung des Lichtsenders 2. Die Sendelogik in der Ansteuereinheit 4 wird bevorzugt als UND-Verknüpfung ausgeführt. Dies entspricht einer Entscheidung für den kürzeren der beiden Sendepulse aus dem ersten ASIC-Baustein 10 und dem zweiten ASIC-Baustein 12. Dies ist sinnvoll, falls eine Signalübersteuerung der dominierende Fehlermechanismus ist. Alternativ kann die Sendelogik der Ansteuereinheit 4 als ODER-Verknüpfung betrieben werden. Dies entspricht einer Entscheidung für den längeren der beiden Sendepulse aus dem ersten ASIC-Baustein 10 und dem zweiten ASIC-Baustein 12. Dies kann sinnvoll sein, falls ein Fehlschalten aufgrund zu niedriger Empfangsenergie der dominierende Fehlermechanismus ist.

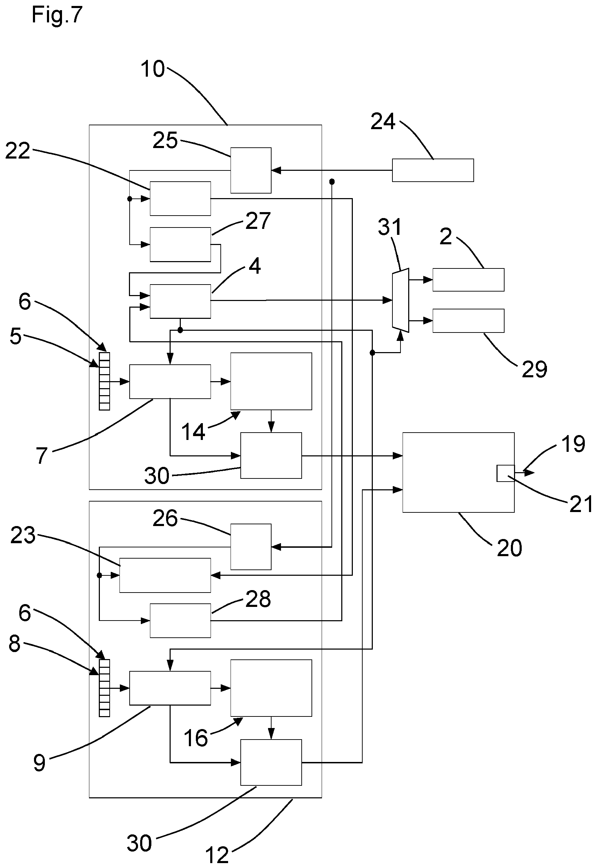

Gemäß Figur 7 ist eine außerhalb des ASIC-Bausteins 10 angeordnete externe Auswerteeinheit angeordnet, welche mit der Hauptauswerteeinheit 7 und der Nebenauswerteeinheit 9 verbunden ist, wobei die externe Auswerteeinheit 20 mindestens einen Ausgang 21 für ein Ergebnisobjektfeststellungssignal 19 aufweist.

Die Generierung des Ergebnisobjektfeststellungssignals 19 kann durch eine externe Auswerteeinheit 20, beispielsweise einen Mikrocontroller erfolgen. Hierbei kann eine differenziertere Auswertung erfolgen als bei einer Generierung des Ergebnisobjektfeststellungssignals 19 in der Doppelempfängerauswerteeinheit im ASIC-Baustein 10. Insbesondere kann eine Energie der Empfangssignale von dem ersten ASIC-Baustein 10 und dem zweiten ASIC-Baustein 12 ausgewertet werden. Damit kann nicht nur diejenige Einheit mit einem Empfangssignal unterhalb einer Mindestschwelle oder oberhalb einer Höchstschwelle ignoriert werden, sondern außerdem im dazwischen liegenden Bereich eine empfangssignalabhängige Gewichtung durchgeführt werden. Eine Übermittlung der zusätzlichen Informationen an die externe Auswerteeinheit 20 erfolgt beispielsweise über einen in dem ersten ASIC-Baustein 10 und dem zweiten ASIC-Baustein 12 jeweils integrierten Datenbus 30.

Gemäß Figur 7 kann das Doppelempfängerprinzip mit einem Doppelsenderprinzip kombiniert werden. Die beiden Sendelichtstrahlen treffen meist an unterschiedlichen Stellen des Objekts unter verschiedenen Winkeln auf, was zu einer weiteren Erhöhung der Detektionsrobustheit führt. Da die Lichtfleckschwerpunkte und/oder insbesondere die Lichtfleckmediane der beiden Empfangsstrahlen nicht notwendigerweise identisch sind, muss ein virtueller Trennsteg zwischen Nah- und Fernbereich auf dem Lichtempfänger 5 bzw. 8 abhängig vom gerade verwendeten Lichtsender 2 bzw. 29 umgeschaltet werden. Hierzu generiert der erste ASIC-Empfangsbaustein 10 ein zusätzliches Senderauswahlsignal, das mit einem Sendemultiplexer 31 und dem zweiten ASIC-Baustein 12 verbunden ist und von diesem ausgewertet wird. Dadurch wird sichergestellt, dass der erste ASIC-Baustein 11 und der zweite ASIC-Baustein 12 hinsichtlich der Senderauswahl synchron arbeiten.

### Bezugszeichen:

- 1: optoelektronische Sensoranordnung
- 2: Lichtsender
- 3: Überwachungsbereich
- 4: Ansteuereinheit
- 5: erster Lichtempfänger
- 6: Empfängerzeile
- 7: erste Hauptauswerteeinheit
- 8: zweiter Lichtempfänger
- 9: zweite Nebenauswerteeinheit
- 10: erster ASIC-Baustein
- 12: zweiter ASIC-Baustein
- 13: Ausgang
- 14: erstes Objektfeststellungssignal
- 15: Ausgang
- 16: zweites Objektfeststellungssignal
- 17: Doppelempfängerauswerteeinheit
- 18: Ausgang
- 19: Ergebnisobjektfeststellungssignal
- 20: externe Auswerteeinheit
- 21: Ausgang
- 22: Doppelempfängersynchronisationseinheit
- 23: Doppelempfängersynchronisationseinheit
- 24: Oszillator
- 25: Taktgeber
- 26: Taktgeber
- 27: Sendegenerator
- 28: Sendegenerator
- 29: zweiter Lichtsender
- 30: Datenbus
- 31: Sendemultiplexer
- 35: Leiterplatte

## Patentansprüche

1. Optoelektronische Sensoranordnung (1) mit mindestens einem Lichtsender (2),
zum Aussenden von Lichtsignalen in einen Überwachungsbereich (3),
einer Ansteuereinheit (4) zur Ansteuerung des Lichtsenders (2),
mit einem ersten Lichtempfänger (5) zum Empfang der von dem Lichtsender (2) ausgesendeten Lichtsignalen, wobei der Lichtempfänger (5) als Empfängerzeile (6) ausgebildet ist,
mit einer ersten Hauptauswerteeinheit (7) zur Auswertung der Empfangssignale des ersten Lichtempfängers (5),
mit einem zweiten Lichtempfänger (8) zum Empfang der von dem Lichtsender (2) ausgesendeten Lichtsignalen, wobei der Lichtempfänger (8) als Empfängerzeile (6) ausgebildet ist,
wobei die optoelektronische Sensoranordnung ein Triangulationslichttaster ist, **dadurch gekennzeichnet, dass** die optoelektronische Sensoranordnung mit einer zweiten Nebenauswerteeinheit (9) zur Auswertung der Empfangssignale des zweiten Lichtempfängers (8) ausgestattet ist, und wenigstens ein erster ASIC-Baustein (10) vorgesehen ist, wobei der ASIC-Baustein (10) mindestens die Ansteuereinheit (4) aufweist, der erste Lichtempfänger (5) und die erste Hauptauswerteeinheit (7) in dem ersten ASIC-Bausteins (10) angeordnet ist und der zweite Lichtempfänger (8) und die zweite Nebenauswerteeinheit (9) in einem zweiten ASIC-Bausteins (12) angeordnet ist, wobei der erste ASIC-Baustein (10) und der zweite ASIC-Baustein (12) jeweils eine Doppelempfängersynchronisationseinheit (22) aufweisen, die jeweils miteinander verbunden sind.

2. Optoelektronische Sensoranordnung (1) nach Anspruch 1, **dadurch gekennzeichnet, dass** die Hauptauswerteeinheit (7) einen Ausgang (13) für ein erstes Objektfeststellungssignal (14) aufweist und die Nebenauswerteeinheit (9) einen Ausgang (15) für ein zweites Objektfeststellungssignal (16) aufweist, wobei eine Doppelempfängerauswerteeinheit (17) jeweils einen Eingang für das erste Objektfeststellungssignal (14) und das zweites Objektfeststellungssignal (16) aufweist, wobei die Doppelempfängerauswerteeinheit (17) mindestens einen Ausgang (18) für ein Ergebnisobjektfeststellungssignal (19) aufweist.

3. Optoelektronische Sensoranordnung (1) nach Anspruch 2, **dadurch gekennzeichnet, dass** die Hauptauswerteeinheit (7) einen Ausgang für ein erstes Objektabstandssignal aufweist und die Nebenauswerteeinheit (9) einen Ausgang für ein zweites Objektabstandssignal aufweist, wobei eine Doppelempfängerauswerteeinheit (17) jeweils einen Eingang für das erste Objektabstandssignal und das zweite Objektabstandssignal aufweist, wobei die Doppelempfängerauswerteeinheit (17) mindestens einen Ausgang (18) für ein Ergebnisobjektabstandssignal aufweist.

4. Optoelektronische Sensoranordnung (1) nach Anspruch 3, **dadurch gekennzeichnet, dass** in der Doppelempfängerauswerteeinheit (17) zur Generierung des Ergebnisobjektfeststellungssignals (19) der Ausgang (13) der Hauptauswerteeinheit (7) mit dem Ausgang (15) der Nebenauswerteeinheit (9) logisch und/oder numerisch miteinander verknüpft sind.

5. Optoelektronische Sensoranordnung (1) nach mindestens einem der vorhergehenden Ansprüche 3 bis 4, **dadurch gekennzeichnet, dass** in der Doppelempfängerauswerteeinheit (17) zur Generierung des Ergebnisobjektabstandssignals ein Ausgang der Hauptauswerteeinheit (7) mit einem Ausgang der Nebenauswerteeinheit (9) logisch bewertet und/oder numerisch gewichtet ist.

6. Optoelektronische Sensoranordnung (1) nach mindestens einem der vorhergehenden Ansprüche 2-5, **dadurch gekennzeichnet, dass** der erste ASIC-Baustein (10) die Doppelempfängerauswerteeinheit (17) aufweist, welche mit der Hauptauswerteeinheit (7) und der Nebenauswerteeinheit (9) verbunden ist.

7. Optoelektronische Sensoranordnung (1) nach Anspruch 1, **dadurch gekennzeichnet, dass** eine außerhalb des ersten ASIC-Bausteins (10) angeordnete externe Auswerteeinheit (20) angeordnet ist, welche mit der Hauptauswerteeinheit (7) und der Nebenauswerteeinheit (9) verbunden ist, wobei die externe Auswerteeinheit (20) mindestens einen Ausgang (21) für ein Ergebnisobjektfeststellungssignal (19) aufweist.

8. Optoelektronische Sensoranordnung nach Anspruch 1, **dadurch gekennzeichnet, dass** die Doppelempfängersynchronisationseinheiten (22) jeweils an einen gemeinsamen Oszillator (24) angeschlossen sind und jeweils einen Taktgeber (25, 26) aufweisen.

9. Optoelektronische Sensoranordnung nach mindestens einem der vorhergehenden Ansprüche, **dadurch gekennzeichnet, dass** die Ansteuereinheit (4) in dem ersten ASIC-Baustein (10) angeordnet ist.

10. Optoelektronische Sensoranordnung nach Anspruch 8, **dadurch gekennzeichnet, dass** der erste ASIC-Baustein (10) und der zweite ASIC-Baustein (12) jeweils einen Sendegenerator (27, 28) aufweisen, welche jeweils mit dem Taktgeber (25, 26) verbunden sind und wobei die Sendegeneratoren (27, 28) mit der Ansteuereinheit (4) verbunden sind.

11. Optoelektronische Sensoranordnung nach mindestens einem der vorhergehenden Ansprüche, **dadurch gekennzeichnet, dass** ein erster Lichtsender (2) und ein zweiter Lichtsender (29) angeordnet sind und an dem ersten ASIC-Baustein (10) und/oder an dem zweiten ASIC-Baustein (12) angeschlossen sind.

## Claims

1. An optoelectronic sensor arrangement (1) having at least one light transmitter (2) for transmitting light signals into a monitored zone (3);
a control unit (4) for controlling the light transmitter (2),
having a first light receiver (5) for receiving the light signals transmitted from the light transmitter (2), wherein the light receiver (5) is configured as a receiver line (6);
having a first main evaluation unit (7) for evaluating the received signals of the first light receiver (5);
having a second light receiver (8) for receiving the light signals transmitted from the light transmitter (2), wherein the light receiver (8) is configured as a receiver line (6);
wherein the optoelectronic sensor arrangement is a triangulation light scanner,
**characterized in that** the optoelectronic sensor arrangement is equipped with a second secondary evaluation unit (9) for evaluating the received signals of the second light receiver (8); and
at least one first ASIC module (10) is provided, with the ASIC module (10) having at least the control unit (4), with the first light receiver (5) and the first main evaluation unit (7) being arranged in the first ASIC module (10) and the second light receiver (8) and the second secondary evaluation unit (9) being arranged in a second ASIC module (12), and with the first ASIC module (10) and the second ASIC module (12) each having a double receiver synchronizer unit (22) that are each connected to one another.

2. An optoelectronic sensor arrangement (1) in accordance with claim 1, **characterized in that** the main evaluation unit (7) has an outlet (13) for a first object detection signal (14) and the secondary evaluation unit (9) has an outlet (15) for a second object determination signal (16), with a double receiver evaluation unit (17) respectively having an inlet for the first object determination signal (14) and the second object determination signal (16), and with the double receiver evaluation unit (17) having at least one outlet (18) for a result object determination signal.

3. An optoelectronic sensor arrangement (1) in accordance with claim 2, **characterized in that** the main evaluation unit (7) has an outlet for a first object distance signal and the secondary evaluation unit (9) has an outlet for a second object distance signal, with a double receiver evaluation unit (17) respectively having an inlet for the first object distance signal and the second object distance signal, and with the double receiver evaluation unit (17) having at least one outlet (18) for a result object distance signal.

4. An optoelectronic sensor arrangement (1) in accordance with claim 3, **characterized in that** the outlet (13) of the main evaluation unit (7) is logically and/or numerically linked with the outlet (15) of the secondary evaluation unit (9) in the double receiver evaluation unit (17) for generating the result object determination signal (19).

5. An optoelectronic sensor arrangement (1) in accordance with at least one of the preceding claims 3 to 4, **characterized in that** an outlet of the main evaluation unit (7) is logically evaluated and/or numerically weighted with an outlet of the secondary evaluation unit (9) in the double receiver evaluation unit (17) for generating the result object distance signal.

6. An optoelectronic sensor arrangement (1) in accordance with at least one of the preceding claims 2 - 5, **characterized in that** the first ASIC module (10) has the double receiver evaluation unit (17) that is connected to the main evaluation unit (7) and to the secondary evaluation unit (9).

7. An optoelectronic sensor arrangement (1) in accordance with claim 1, **characterized in that** an external evaluation unit (20) is arranged that is arranged outsie the first ASIC module (10) and that is connected to the main evaluation unit (7) and to the secondary evaluation unit (9), with the external evaluation unit (20) having an outlet (21) for a result object determination signal (19).

8. An optoelectronic sensor arrangement in accordance with claim 1, **characterized in that** the double receiver synchronization units (22) are each connected to a common oscillator (24) and each have a clock (25, 26).

9. An optoelectronic sensor arrangement in accordance with at least one of the preceding claims, **characterized in that** the control unit (4) is arranged in the first ASIC module (10).

10. An optoelectronic sensor arrangement in accordance with claim 8, **characterized in that** the first ASIC module (10) and the second ASIC module (12) each have a transmitting generator (27, 28) that are each connected to the clock (25, 26), and with the transmitting generators (27, 28) being connected to the control unit (4).

11. An optoelectronic sensor arrangement in accordance with at least one of the preceding claims, **characterized in that** a first light transmitter (2) and a second light transmitter (29) are arranged and are connected to the first ASIC module (10) and/or to the second ASIC module (12).

## Revendications

1. Ensemble capteur optoélectronique (1) comportant au moins un émetteur de lumière (2) pour émettre des signaux lumineux dans une zone à surveiller (3), une unité de pilotage (4) pour piloter l'émetteur de lumière (2),
comportant
un premier récepteur de lumière (5) pour recevoir les signaux lumineux émis par l'émetteur de lumière (2), le récepteur de lumière (5) étant réalisé sous forme de ligne de réception (6),
une première unité d'évaluation principale (7) pour évaluer les signaux de réception du premier récepteur de lumière (5),
un deuxième récepteur de lumière (8) pour recevoir les signaux lumineux émis par l'émetteur de lumière (2), le récepteur de lumière (8) étant réalisé sous forme de ligne de réception (6),
l'ensemble capteur optoélectronique étant un détecteur photoélectrique à triangulation,
**caractérisé en ce que**
l'ensemble capteur optoélectronique est muni d'une deuxième unité d'évaluation secondaire (9) pour évaluer les signaux de réception du deuxième récepteur de lumière (8), et
il est prévu au moins un premier composant ASIC (10), le composant ASIC (10) comprenant au moins l'unité de pilotage (4), le premier récepteur de lumière (5) et la première unité d'évaluation principale (7) étant disposés dans le premier composant ASIC (10), et le deuxième récepteur de lumière (8) et la deuxième unité d'évaluation secondaire (9) étant disposés dans un deuxième composant ASIC (12), le premier composant ASIC (10) et le deuxième composant ASIC (12) comprenant chacun une unité de synchronisation à double récepteur (22), qui sont reliées l'une à l'autre.

2. Ensemble capteur optoélectronique (1) selon la revendication 1, **caractérisé en ce que** l'unité d'évaluation principale (7) présente une sortie (13) pour un premier signal de détection d'objet (14), et l'unité d'évaluation secondaire (9) présente une sortie (15) pour un deuxième signal de détection d'objet (16), une unité d'évaluation à double récepteur (17) présentant une entrée respective pour le premier signal de détection d'objet (14) et pour le deuxième signal de détection d'objet (16), l'unité d'évaluation à double récepteur (17) présentant au moins une sortie (18) pour un signal de détection d'objet de résultat (19).

3. Ensemble capteur optoélectronique (1) selon la revendication 2, **caractérisé en ce que** l'unité d'évaluation principale (7) présente une sortie pour un premier signal de distance d'objet, et l'unité d'évaluation secondaire (9) présente une sortie pour un deuxième signal de distance d'objet, une unité d'évaluation à double récepteur (17) présentant une entrée respective pour le premier signal de distance d'objet et pour le deuxième signal de distance d'objet, l'unité d'évaluation à double récepteur (17) présentant au moins une sortie (18) pour un signal de distance d'objet de résultat.

4. Ensemble capteur optoélectronique (1) selon la revendications 3, **caractérisé en ce que** dans l'unité d'évaluation à double récepteur (17), la sortie (13) de l'unité d'évaluation principale (7) est combinée logiquement et/ou numériquement avec la sortie (15) de l'unité d'évaluation secondaire (9), afin de générer le signal de détection d'objet résultat (19).

5. Ensemble capteur optoélectronique (1) selon l'une au moins des revendications précédentes 3 à 4,
**caractérisé en ce que** dans l'unité d'évaluation à double récepteur (17), une sortie de l'unité d'évaluation principale (7) est évaluée logiquement et/ou pondérée numériquement avec une sortie de l'unité d'évaluation secondaire (9), afin de générer le signal de distance d'objet résultat.

6. Ensemble capteur optoélectronique (1) selon l'une au moins des revendications précédentes 2 à 5,
**caractérisé en ce que** le premier composant ASIC (10) comprend l'unité d'évaluation à double récepteur (17) qui est reliée à l'unité d'évaluation principale (7) et à l'unité d'évaluation secondaire (9).

7. Ensemble capteur optoélectronique (1) selon la revendication 1, **caractérisé en ce qu'**il est prévu une unité d'évaluation externe (20) disposée à l'extérieur du premier composant ASIC (10), laquelle est reliée à l'unité d'évaluation principale (7) et à l'unité d'évaluation secondaire (9), l'unité d'évaluation externe (20) présentant au moins une sortie (21) pour un signal de détection d'objet résultat (19).

8. Ensemble capteur optoélectronique selon la revendication 1,
**caractérisé en ce que** les unités de synchronisation à double récepteur (22) sont chacune connectées à un oscillateur commun (24) et présentent chacune une horloge (25, 26).

9. Ensemble capteur optoélectronique selon l'une au moins des revendications précédentes,
**caractérisé en ce que** l'unité de pilotage (4) est disposée dans le premier composant ASIC (10).

10. Ensemble capteur optoélectronique selon la revendication 8,
**caractérisé en ce que** le premier composant ASIC (10) et le deuxième composant ASIC (12) présentent chacun un générateur d'émission (27, 28) qui sont reliés chacun à l'horloge (25, 26), les générateurs d'émission (27, 28) étant reliés à l'unité de pilotage (4).

11. Ensemble capteur optoélectronique selon l'une au moins des revendications précédentes,
**caractérisé en ce qu'**il est prévu un premier émetteur de lumière (2) et un deuxième émetteur de lumière (29) qui sont connectés au premier composant ASIC (10) et/ou au deuxième composant ASIC (12).
